# FASCICULE DE BREVET EUROPEEN

(11) **EP 0 925 906 B1**
(45) Date de publication et mention de la délivrance du brevet: **04.06.2003**
(21) Numéro de dépôt: 98402247.5
(22) Date de dépôt: 11.09.1998
(51) Int. Cl.: B29C 49/20, B29C 49/48, B29C 49/42

(54) **Outillage pour le moulage par soufflage d'un objet comportant un corps à l'intérieur d'une enveloppe**
Vorrichtung zum Blasformen von Gegenständen die einen umhüllten Innenkörper aufweisen
Device for blow moulding of parts which contain a body inside of a envelope

(30) Priorité: 17.12.1997 FR 9711584
(43) Date de publication de la demande: 30.06.1999
(73) Titulaire: Manuplast, 61600 La Ferte Mace (FR)
(72) Inventeur: Rapeaud, Olivier Jean-Baptiste, 61600 La Ferte Mace (FR)
(74) Mandataire: Lemoine, Robert

(56) Documents cités:
- WO-A-90/11176
- DE-A- 1 930 948
- PATENT ABSTRACTS OF JAPAN vol. 014, no. 058 (M-0930), 2 février 1990 & JP 01 283125 A (NISSAN MOTOR CO LTD), 14 novembre 1989
- PATENT ABSTRACTS OF JAPAN vol. 011, no. 071 (M-567), 4 mars 1987 & JP 61 228929 A (KYORAKU CO LTD), 13 octobre 1986
- PATENT ABSTRACTS OF JAPAN vol. 010, no. 109 (M-472), 23 avril 1986 & JP 60 239222 A (KIYOORAKU KK), 28 novembre 1985
- PATENT ABSTRACTS OF JAPAN vol. 010, no. 073 (M-463), 22 mars 1986 & JP 60 217117 A (INOUE EMU TEE PII KK), 30 octobre 1985

## Description

La présente invention concerne un outillage pour le moulage par soufflage d'un objet comportant un corps situé à l'intérieur d'une enveloppe et se prolongeant à l'extérieur de celle-ci en au moins un emplacement comme cela est décrit dans le document DE-A-1930948 et comme défini dans le préambule de la revendication 1.

De tels objets sont difficiles à fabriquer lorsque le corps qui est situé à l'intérieur de l'enveloppe a des dimensions relativement importantes. Dans ce cas, il arrive en effet fréquemment que la paraison utilisée pour réaliser l'enveloppe vienne toucher accidentellement le corps pendant l'opération de moulage par soufflage et qu'à la suite de ce contact l'objet fabriqué soit défectueux et ne puisse être mis sur le marché.

La présente invention, comme définie dans la revendication 1, se propose d'apporter une solution à ce problème et, pour ce faire, elle a pour objet un outillage pour le moulage par soufflage d'un objet ayant la constitution indiquée ci-dessus, cet outillage comprenant:
- deux matrices disposées l'une en face de l'autre et comportant des faces en regard dans lesquelles sont ménagées des cavités complémentaires dont les entrées sont ceinturées par des protubérances annulaires se faisant face ;
- deux cadres montés l'un en face de l'autre sur les surfaces latérales des matrices et faisant saillie sur les faces en regard de celles-ci ;
- des moyens de commande pour déplacer les cadres conjointement avec les matrices entre une position inactive
dans laquelle ils sont éloignés l'un de l'autre et une position active dans laquelle ils sont appliqués l'un contre l'autre ; et
- des moyens destinés à être actionnés lorsque les cadres sont dans leur position active, afin qu'ils déplacent les matrices par rapport auxdits cadres, entre une position d'attente dans laquelle leurs protubérances annulaires sont éloignées l'une de l'autre et une position de fermeture dans laquelle leurs protubérances annulaires sont appliquées l'une contre l'autre
- une paraison de matière plastique destinée à constituer l'enveloppe d'un objet à fabriquer étant disposée autour du corps, entre les deux matrices lorsque les cadres sont dans leur position inactive, tandis que de l'air est insufflé dans la paraison au moins dès que les cadres viennent dans leur position active et au moins jusqu'à ce que les matrices viennent dans leur position de fermeture, l'objet résultant étant ensuite extrait de l'outillage.

Grâce à la configuration particulière des faces en regard des matrices et à la présence des cadres, il est maintenant possible d'éviter que la paraison vienne accidentellement en contact avec le corps lors de l'opération de moulage.

En effet, lorsque les cadres sont appliqués l'un contre l'autre alors que les matrices sont encore dans leur position d'attente, la paraison s'étend en partie dans deux zones opposées d'un espace annulaire situé entre les cadres et les protubérances, ce qui permet à l'air de soufflage de l'éloigner davantage du corps et réduit les risques pour qu'elle vienne accidentellement en contact avec celui-ci.

De préférence, les faces en regard des matrices s'écartent l'une de l'autre dans leur partie située à l'extérieur des protubérances annulaires.

L'espace annulaire situé entre les cadres et les protubérances est dans ce cas suffisamment grand pour éviter que la paraison risque de venir en contact avec sa surface avant l'opération de soufflage d'air, ce qui permet d'améliorer encore la qualité des objets fabriqués.

Lorsque les objets à fabriquer comportent un corps creux, il est souhaitable de prévoir des moyens pour insuffler de l'air dans le corps creux pendant que de l'air est insufflé dans la paraison.

Ces moyens d'insufflation évitent en effet que le corps creux, s'il est facilement déformable, se recroqueville sur lui-même sous l'effet de l'air insufflé dans la paraison.

Avantageusement, les moyens de commande sont situés du côté opposé aux faces en regard des matrices.

Cette disposition permet bien entendu de simplifier la structure de l'outillage.

Selon un mode de réalisation préféré de l'outillage conforme à la présente invention, les moyens prévus pour déplacer les matrices entre leur position d'attente et leur position de fermeture lorsque les cadres sont dans leur position active sont actionnés par les moyens de commande et comprennent des éléments élastiques interposés entre les cadres et des butées solidaires des matrices, ces butées étant situées du côté opposé aux faces en regard des cadres.

Un mode d'exécution de la présente invention sera décrit ci-après à titre d'exemple nullement limitatif en référence aux dessins annexés dans lesquels :
- la figure 1 est une vue en coupe schématique d'un outillage conforme à l'invention, les matrices et les cadres étant respectivement dans leur position d'attente et leur position inactive tandis qu'un corps creux destiné à être en partie à l'intérieur d'un objet à fabriquer est disposé entre les matrices ;
- la figure 2 est une vue de l'outillage visible sur la figure 1, mais dans lequel une paraison de matière plastique s'étend entre les matrices et les cadres et entoure le corps creux ;
- la figure 3 est une vue de l'outillage visible sur la figure 2, mais dans lequel les cadres sont dans leur position active tandis que les matrices sont encore dans leur position d'attente ;
- la figure 4 est une vue de l'outillage visible sur la figure 3, mais dans lequel de l'air est insufflé dans la paraison et le corps creux ;
- la figure 5 est une vue schématique selon la ligne V-V de la figure 4 ;
- la figure 6 est une vue de l'outillage visible sur la figure 4, mais dans lequel les matrices sont dans leur position de fermeture ;
- la figure 7 est une vue de l'outillage visible sur la figure 6, mais dans lequel les matrices et les cadres sont revenus dans leurs positions respectives visibles sur la figure 1 ;
- la figure 8 est une vue en perspective à échelle agrandie de l'objet à sa sortie de l'outillage ; et
- la figure 9 est une vue en perspective de l'objet visible sur la figure 8, dans son état définitif après élimination des bavures provenant de la paraison.

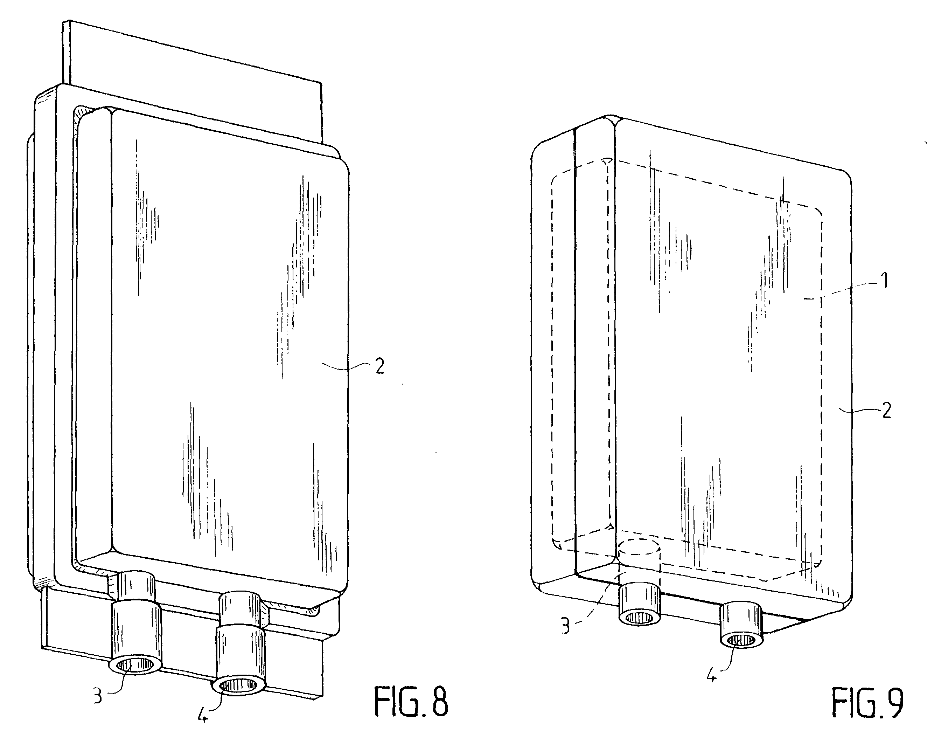

L'outillage conforme à l'invention permet la fabrication d'objets tels que celui qui est représenté sur la figure 9 et qui comporte un corps creux 1 situé à l'intérieur d'une enveloppe 2.

Le corps 1 est pourvu d'un conduit 3 se prolongeant à l'extérieur de l'enveloppe 2. Il est réalisé en matière plastique, mais pourrait être fait d'une toute autre matière. Il pourrait par ailleurs être plein si cela était nécessaire.

Dans l'exemple représenté sur la figure 9, le corps 1 est en contact avec l'enveloppe uniquement à l'emplacement où le conduit 3 traverse cette dernière. Il va de soi cependant qu'il pourrait éventuellement comporter une patte faisant saillie sur sa face opposée au conduit 3 et enserrée par l'enveloppe 2. Grâce à cette patte, le corps 1 pourrait en effet être maintenu beaucoup plus rigidement à l'intérieur de l'enveloppe.

On notera par ailleurs que l'enveloppe est en matière plastique, ce qui est imposé par le procédé de moulage par soufflage mis en oeuvre pour la fabrication de l'objet, et que son volume intérieur communique avec l'extérieur grâce à un conduit 4 parallèle et adjacent au conduit 3.

On va maintenant décrire l'outillage utilisé pour fabriquer l'objet visible sur la figure 9.

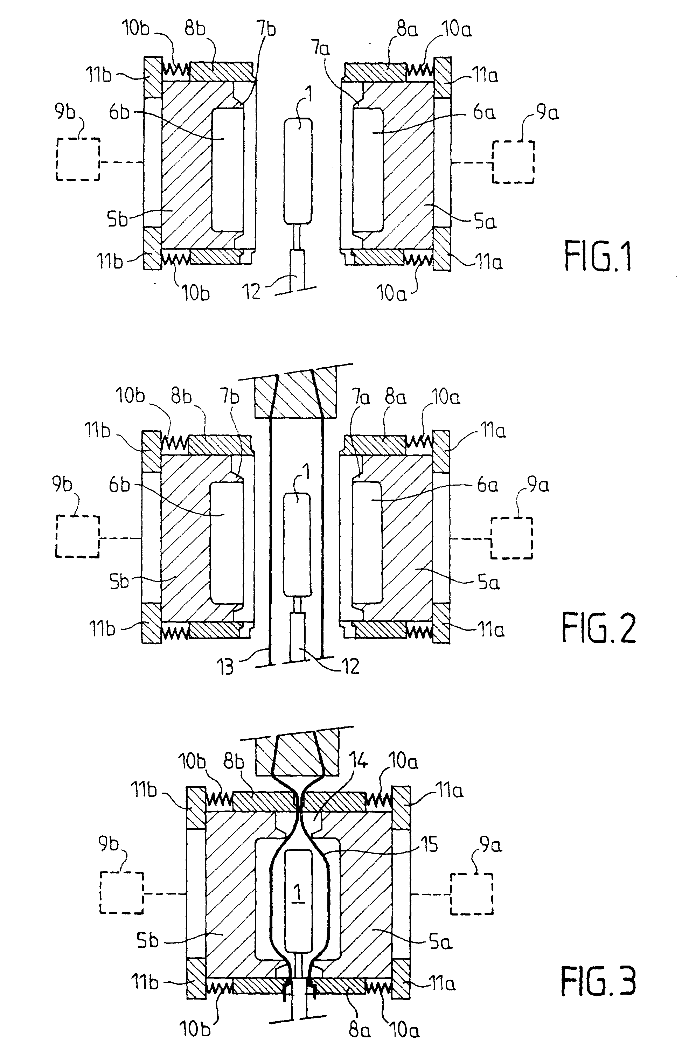

Comme on peut le voir sur les figures 1 à 7, cet outillage comprend tout d'abord deux matrices 5a, 5b disposées l'une en face de l'autre et comportant des cavités complémentaires 6a, 6b dont les entrées sont ceinturées par des protubérances annulaires 7a, 7b faisant respectivement saillie sur leurs faces en regard, lesquelles s'écartent l'une de l'autre dans leur partie située à l'extérieur des protubérances.

L'outillage comprend également deux cadres 8a, 8b montés l'un en face de l'autre sur les surfaces latérales des matrices 5a, 5b et faisant normalement saillie sur les faces en regard de celles-ci.

Les cadres 8a, 8b sont déplaçables en sens inverse conjointement avec les matrices, entre une position inactive dans laquelle ils sont éloignés l'un de l'autre et une position active dans laquelle ils sont appliqués l'un contre l'autre.

Les matrices 5a, 5b sont par ailleurs déplaçables par rapport aux cadres 8a, 8b, lorsque ceux-ci sont dans leur position active, entre une position d'attente dans laquelle leurs protubérances 7a, 7b sont maintenues éloignées l'une de l'autre et une position de fermeture dans laquelle leurs protubérances sont appliquées l'une contre l'autre.

Des moyens de commande représentés schématiquement en 9a, 9b sur les dessins sont prévus pour déplacer les cadres 8a, 8b conjointement avec les matrices 5a, 5b.

Ces moyens sont situés du côté opposé aux faces en regard des matrices. Ils sont de préférence constitués par des vérins hydrauliques, mais rien ne s'oppose à ce que ces derniers soient remplacés par d'autres organes classiques permettant de déplacer les cadres et les matrices en sens inverse.

Des moyens 10a, 10b sont par ailleurs prévus pour être actionnés par les moyens de commande 9a, 9b lorsque les cadres 8a, 8b sont dans leur position active, afin de déplacer les matrices 5a, 5ab par rapport à ces derniers, entre leur position d'attente et leur positon de fermeture.

Dans le mode de réalisation représenté, les moyens 10a, 10b sont constitués par des ressorts interposés entre les cadres 8a, 8b et des butées 11a, 11b solidaires des matrices 5a, 5b, les butées étant situées du côté opposé aux faces en regard des cadres.

On va maintenant décrire le fonctionnement de l'outillage selon la présente invention ainsi que les opérations qu'il convient d'effectuer pour fabriquer l'objet visible sur la figure 9.

Au départ, l'outillage est dans la position représentée sur la figure 1.

Dans cette position, les cadres 8a, 8b sont dans leur position inactive et par conséquent éloignés l'un de l'autre. Les matrices 5a, 5b sont également éloignées l'une de l'autre.

On installe alors un corps creux 1 sur une canne de soufflage 12 de telle sorte qu'il se trouve dans l'espace situé entre les cavités complémentaires 6a, 6b des matrices.

Après la mise en place du corps creux 1, on fait descendre une paraison 13 de matière plastique entre les matrices et les cadres associés, comme représenté sur la figure 2. La paraison 13 entoure alors le corps creux 1 et la partie supérieure de la canne de soufflage 12.

On actionne ensuite les moyens de commande 9a,9b afin d'amener les cadres 8a, 8b dans leur position active, c'est-à-dire dans la positon dans laquelle leurs faces en regard sont appliquées l'une contre l'autre, comme représenté sur la figure 3.

Les matrices 5a, 5b qui ont été entraînées conjointement avec les cadres se trouvent alors dans leur position d'attente dans laquelle elles sont situées à une distance prédéterminée l'une de l'autre, cette distance étant évidemment plus petite que celle qui les séparait lorsque les cadres étaient dans leur position inactive visible sur la figure 1.

Comme les protubérances 7a, 7b des faces en regard des matrices sont éloignées l'une de l'autre, les cavités complémentaires 6a, 6b communiquent avec l'espace annulaire 14 ménagé entres les cadres 8a, 8b et les protubérances 7a, 7b.

Par ailleurs, comme les cadres s'appuient l'un contre l'autre, ils pincent fortement la paraison 13 de sorte que le tronçon de celle-ci qui est situé entre eux forme une poche 15 renfermant le corps 1.

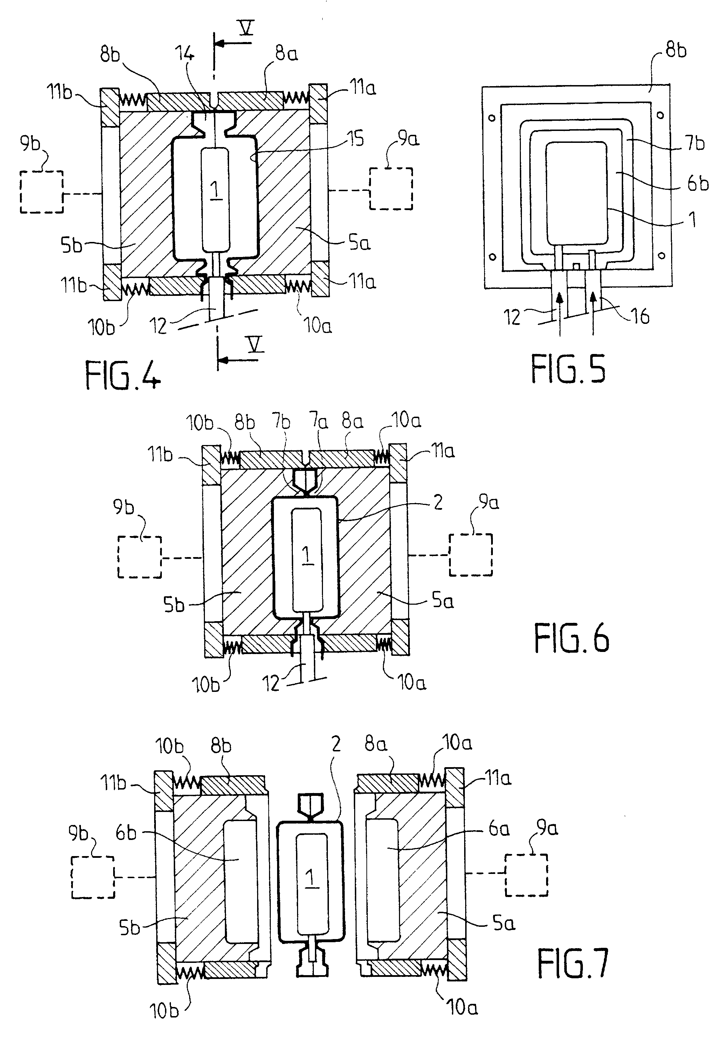

On insuffle de l'air dans le corps 1 et dans la poche 15 dès que celle-ci est fermée. Pour ce faire, on utilise la canne de soufflage 12 et une canne de soufflage 16 qui n'est visible que sur la figure 5.

Sous l'action de l'air insufflé dans la poche, la paroi de celle-ci vient contre les protubérances 7a, 7b, comme représenté sur la figure 3.

Etant donné que les protubérances sont éloignées l'une de l'autre, la paroi de la poche 15 est située à une certaine distance du corps 1 et se trouve suffisamment éloignée de celui-ci pour ne pas risquer de venir à son contact.

Après une période d'insufflation d'air suffisamment longue, la paroi de la poche est appliquée intimement contre la paroi des cavités complémentaires 6a, 6b et celle de l'espace annulaire 14, comme représenté sur la figure 4.

On actionne alors à nouveau les moyens de commande 9a, 9b pour que ceux-ci compriment les ressorts 10a, 10b jusqu'à ce que les matrices 5a, 5b viennent dans leur position de fermeture.

Comme le montre la figure 6, les protubérances 7a, 7b des matrices sont appliquées l'une contre l'autre lorsque celles-ci sont dans leur position de fermeture. Elles pincent par conséquent la paroi de la poche 15, réduisant ainsi le volume initial de cette dernière.

On interrompt ensuite le soufflage de l'air dans le corps 1 et la poche 15, puis on actionne les moyens de commande 9a, 9b en sens inverse afin de ramener les matrices 5a, 5b et les cadres 8a, 8b dans leur position d'origine, comme représenté sur la figure 7.

On extrait alors de l'outillage l'objet fabriqué qui a la configuration représentée sur la figure 8.

Il suffit maintenant de sectionner la partie de la paraison 13 dont la forme correspond à celle de l'espace annulaire 14 pour obtenir l'objet fini représenté sur la figure 9.

Il ressort de ce qui précède que l'outillage conforme à l'invention permet de fabriquer des objets comportant un corps à l'intérieur d'une enveloppe, en évitant que le corps vienne accidentellement au contact de l'enveloppe.

## Revendications

1. Outillage pour le moulage par soufflage d'un objet comportant un corps (1) situé à l'intérieur d'une enveloppe (2) et se prolongeant à l'extérieur de celle-ci en au moins un emplacement, **caractérisé en ce qu'**il comprend :
- deux matrices (5a,5b) disposées l'une en face de l'autre et comportant des faces en regard dans lesquelles sont ménagées des cavités complémentaires (6a,6b) dont les entrées sont ceinturées par des protubérances annulaires (7a,7b) se faisant face ;
- deux cadres (8a,8b) montés l'un en face de l'autre sur les surfaces latérales des matrices (5a,5b) et faisant saillie sur les faces en regard de celles-ci ;
- des moyens de commande (9a,9b) pour déplacer les cadres (8a,8b) conjointement avec les matrices (5a,5b) entre une position inactive dans laquelle ils sont éloignés l'un de l'autre et une position active dans laquelle ils sont appliqués l'un contre l'autre ; et
- des moyens (10a,10b) destinés à être actionnés lorsque les cadres (8a,8b) sont dans leur position active, afin qu'ils déplacent les matrices (5a,5b) par rapport auxdits cadres, entre une position d'attente dans laquelle leurs protubérances annulaires (7a,7b) sont éloignées l'une de l'autre et une position de fermeture dans laquelle leurs protubérances annulaires (7a,7b) sont appliquées l'une contre l'autre
une paraison de matière plastique (13) destinée à constituer l'enveloppe (2) d'un objet à fabriquer étant disposée autour du corps (1), entre les deux matrices (5a,5b) lorsque les cadres (8a,8b) sont dans leur position inactive, tandis que de l'air est insufflé dans la paraison (13) au moins dès que les cadres (8a,8b) viennent dans leur position active et au moins jusqu'à ce que les matrices (5a,5b) viennent dans leur position de fermeture, l'objet résultant étant ensuite extrait de l'outillage.

2. Outillage selon la revendication 1, **caractérisé en ce que** les faces en regard des matrices (5a,5b) s'écartent l'une de l'autre dans leur partie située à l'extérieur des protubérances annulaires (7a,7b).

3. Outillage selon la revendication 2, destiné à fabriquer un objet comportant un corps creux (1), **caractérisé en ce que** des moyens (12) sont prévus pour insuffler de l'air dans le corps creux (1) pendant que de l'air est insufflé dans la paraison (13).

4. Outillage selon l'une quelconque des revendications précédentes, **caractérisé en ce que** les moyens de commande (9a,9b) sont situés du côté opposé aux faces en regard des matrices (5a,5b).

5. Outillage selon la revendication 4, **caractérisé en ce que** les moyens prévus pour déplacer les matrices entre leur position d'attente et leur position de fermeture, lorsque les cadres (8a,8b) sont dans leur position active, sont actionnés par les moyens de commande (9a, 9b) et comprennent des éléments élastiques (10a,10b) interposés entre les cadres (8a,8b) et des butées (11a,11b) solidaires des matrices (5a,5b), ces butées étant situées du côté opposé aux faces en regard des cadres (8a,8b).

## Claims

1. A tool assembly for blow moulding an article comprising a body (1) positioned inside an envelope (2) and extending outside thereof in at least one place, **characterized in that** it comprises:
- two dies (5a, 5b) disposed face to face and having opposing faces with complementary cavities (6a, 6b) formed therein whose openings are surrounded by annular protrusions (7a, 7b) facing each other;
- two frames (8a, 8b) mounted face to face on the side surfaces of the dies (5a, 5b) and protruding from the opposing faces thereof;
- operating means (9a, 9b) for moving the frames (8a, 8b) together with the dies (5a, 5b) between an inactive position in which they are away from each other and an active position in which they are applied on each other; and
- means (10a, 10b) to be actuated when the frames (8a, 8b) are in their active position so that they move the dies (5a, 5b) with respect to said frames, between a waiting position in which their annular protrusions (7a, 7b) are away from each other and a closing position in which their annular protrusions (7a, 7b) are applied on each other;
a preform (13) of plastic material for forming the envelope (2) of an article to be manufactured being disposed around the body (1), between the two dies (5a, 5b) when the frames (8a, 8b) are in their inactive position, and air being blown into the preform (13) at least as soon as the frames (8a, 8b) move to their active position and at least until the dies (5a, 5b) move to their closing position, the resulting article being then taken out of the tool assembly.

2. The tool assembly according to claim 1, **characterized in that** the opposing faces of the dies (5a, 5b) move away from each other at their parts located outside the annular protrusions (7a, 7b).

3. The tool assembly according to claim 2, for manufacturing an article comprising a hollow body (1), **characterized in that** means (12) are provided for blowing air into the hollow body (1) while air is blown into the preform (13).

4. The tool assembly according to any of the preceding claims, **characterized in that** the operating means (9a, 9b) are located on the opposite side of the opposing faces of the dies (5a, 5b).

5. The tool assembly according to claim 4, **characterized in that** the means provided for moving the dies between their waiting position and their closing position, when the frames (8a, 8b) are in their active position, are actuated by the operating means (9a, 9b) and comprise spring members (10a 10b) interposed between the frames (8a, 8b) and stops (11a 11b) integral with the dies (5a, 5b), said stops being located on the opposite side of the opposing faces of the frames (8a, 8b).

## Patentansprüche

1. Werkzeug zum Blasformen eines Gegenstands, einen Körper (1) umfassend, der sich im Innern einer Hülle (2) befindet und sich an wenigstens einer Stelle auf deren Außenseite verlängert,
**dadurch gekennzeichnet, dass** es umfasst:
- zwei sich gegenüberstehende Matrizen (5a, 5b), in deren sich gegenüberstehenden Seiten bzw. Flächen komplementäre Vertiefungen (6a, 6b) vorgesehen sind, deren Eingänge von ringförmigen, sich gegenüberstehenden Vorsprüngen (7a, 7b) umgeben sind;
- zwei Rahmen (8a, 8b), sich gegenüberstehend auf die Seitenflächen der Matrizen (5a, 5b) montiert und über deren sich gegenüberstehende Flächen hinausragend;
- Steuereinrichtungen (9a, 9b), um die Rahmen (8a, 8b) zusammen mit den Matrizen (5a, 5b) zu verschieben zwischen einer inaktiven Stellung, in der sie von einander entfernt sind, und einer aktiven Stellung, in der sie gegeneinander gepresst werden; und
- Einrichtungen (10a, 10b), die dazu dienen, betätigt zu werden, wenn die Rahmen (8a, 8b) in ihrer aktiven Stellung sind, damit sie die Matrizen (5a, 5b) in Bezug auf die genannten Rahmen verschieben zwischen einer Wartestellung, in der ihre ringförmigen Vorsprünge (7a, 7b) voneinander entfernt sind, und einer Verschlussstellung, in der ihre ringförmigen Vorsprünge (7a, 7b) gegeneinander gepresst werden;
wobei ein Vorformling aus Kunststoff (13) - dazu bestimmt, die Hülle (2) eines herzustellenden Gegenstands zu bilden -, um den Körper (1) herum angebracht wird, zwischen den beiden Matrizen (5a, 5b), wenn die Rahmen (8a, 8b) in ihrer inaktiven Stellung sind, während die Luft in den Vorformling (13) mindestens schon dann eingeblasen wird, wenn die Rahmen (8a, 8b) ihre aktive Stellung erreichen, und mindestens so lange eingeblasen wird, bis die Matrizen (5a, 5b) ihre Verschlussstellung erreicht haben, wobei der resultierende Gegenstand anschließend aus dem Werkzeug entfernt wird.

2. Werkzeug nach Anspruch 1, **dadurch gekennzeichnet, dass** die sich gegenüberstehenden Flächen der Matrizen (5a, 5b) sich in ihrem sich außerhalb der ringförmigen Vorsprünge (7a, 7b) befindlichen Teil voneinander entfernen.

3. Werkzeug nach Anspruch 2, bestimmt zur Herstellung eines Gegenstands, der einen Hohlkörper (1) umfasst, **dadurch gekennzeichnet, dass** die Einrichtungen (12) vorgesehen sind, um Luft in den Hohlkörper (1) einzublasen, während Luft in den Vorformling (13) eingeblasen wird.

4. Werkzeug nach einem der vorangehenden Ansprüche, **dadurch gekennzeichnet, dass** die Steuereinrichtungen (9a, 9b) sich auf der zu den sich gegenüberstehenden Flächen der Matrizen (5a, 5b) entgegengesetzten Seite befinden.

5. Werkzeug nach Anspruch 4, **dadurch gekennzeichnet, dass** die Einrichtungen, die - wenn die Rahmen (8a, 8b) in ihrer aktiven Stellung sind -, vorgesehen sind zum Verschieben der Matrizen zwischen ihrer Wartestellung und ihrer Verschlussstellung, durch die Steuereinrichtungen (9a, 9b) betätigt werden und elastische Elemente (10a, 10b) umfassen, eingefügt zwischen den Rahmen (8a, 8b) und Anschlägen (11a, 11b), die fest mit den Matrizen (5a, 5b) verbunden sind, wobei diese Anschläge sich auf der zu den sich gegenüberstehenden Flächen der Rahmen (8a, 8b) entgegengesetzten Seite befinden.
